# EUROPÄISCHE PATENTANMELDUNG

(11) **EP 4 700 660 A1**
(43) Veröffentlichungstag der Anmeldung: **25.02.2026**
(21) Anmeldenummer: 24195715.8
(22) Anmeldetag: 21.08.2024
(51) Int. Cl.: G06N 3/098

(54) **VERFAHREN UND SYSTEM ZUM BETRIEB EINES TECHNISCHEN GERÄTS**

(71) Anmelder: Siemens Aktiengesellschaft, 80333 München (DE)
(72) Erfinder: Schall, Daniel, 2020 Hollabrunn (AT)
(74) Vertreter: Siemens Patent Attorneys

(57) **Zusammenfassung**

Computer-implementiertes Verfahren zum Betrieb eines technischen Geräts durch ein Klienten-Server-System mit einem Server und Klienten, welche jeweils mit jeweiligen technischen Geräten verbunden sind, und folgende Schritte ausgeführt werden:
a. Bereitstellen von Betriebs-Daten aus dem Betrieb des technischen Geräts des jeweiligen Klienten, und Erzeugen von Betriebs-Meta-Informationen über den Betrieb des technischen Geräts aus den Betriebs-Daten mithilfe eines bereitgestellten, trainierten Merkmalsextraktions-Modells, durch den Server,
b. Bereitstellen eines trainierten Basis-Modells an den Server, und Anwenden der Betriebs-Daten und der Meta-Informationen des jeweiligen Klienten auf das Basis-Modell und Erhalten von jeweiligen Betriebs-Merkmalen, durch den Server,
c. Berechnen der Ähnlichkeit von zwischen den Betriebs-Merkmalen der jeweiligen Klienten in Form eines Ähnlichkeits-Werts,
d. Zuordnen der Klienten zu einer jeweiligen Klienten-Gruppe aus einer Menge an Klienten-Gruppen, wobei jede Klienten-Gruppe aus einer Menge an Klienten-Gruppen mithilfe eines jeweiligen vorgegebenen Wertebereichs für den Ähnlichkeits-Wert der jeweiligen Klienten-Gruppe definiert sind,
e. Feststellen der größten Klienten-Gruppe aus einer Menge an Klienten-Gruppen, welche die meisten Klienten aufweist,
f. Bilden des durchschnittlichen Ähnlichkeit-Werts aus den jeweiligen Ähnlichkeits-Werten der Klienten der größten Klienten-Gruppe,
g. Festlegen eines Personalisierungs-Faktors für jeden Klienten auf Basis des durchschnittlichen Ähnlichkeit-Werts, welcher eine Ähnlichkeit des jeweiligen Klienten zum durchschnittlichen Ähnlichkeit-Wert der jeweiligen Gruppe ausdrückt,
h. Erzeugen von globalen Modell-Parametern für jeden Klienten basierend auf dem jeweiligen Personalisierungs-Faktor und der Differenz zwischen den jeweiligen Betriebs-Daten und den globalen Modell-Parametern,
i. Aktualisieren des Basis-Modells mithilfe der globalen Modell-Parameter,
j. Fortsetzen bei Schritt c), bis ein vorbestimmtes Kriterium für die Wiederholungen der Schritte c) - i) erreicht ist, sonst Fortsetzen mit Schritt k),
k. Betreiben des technischen Geräts mit dem aktualisierten Basis-Modell.

## Beschreibung

Die Erfindung betrifft ein computer-implementiertes Verfahren zum Betrieb eines technischen Geräts durch ein Klienten-Server-System mit einem Server und Klienten, welche jeweils mit jeweiligen technischen Geräten verbunden sind.

Der Betrieb eines Geräts mithilfe eines Modells auf Basis künstlicher Intelligenz oder maschinellem Lernen ist in der Industrie eine wichtige Anwendung, wobei zunehmen große Sprach-Modelle (engl. "large language model", kurz LLM) eingesetzt werden.

Ein Basis-, Grund- oder Gründungs-Modell (engl. "foundation model", kurz FM) ist ein Machine Learning- (kurz ML) Modell, welches mit sehr umfassenden Daten, also einem sehr großen Datensatz trainiert wird, so dass es auf eine Vielzahl von Anwendungsfällen angewendet werden kann.

Grund-Modelle haben die künstliche Intelligenz (engl. "artificial intelligenz", kurz Kl oder Al) verändert und treiben prominente generative KI-Anwendungen wie ChatGPT an.

Die meisten Ansätze konzentrieren sich auf zentralisierte Daten, um Gründungsmodelle zu trainieren.

In einem beispielhaften Internetszenario werden beispielsweise Daten über einen Crawler gesammelt und in einem zentralen Speicher gespeichert.

Das Foundation-Modell wird typischerweise in einer Cloud-Umgebung trainiert, wie beispielsweise OpenAI und Microsoft Azure.

In einer industriellen Umgebung können Daten über verschiedene Standorte verteilt sein und können nicht geteilt oder an einem zentralen Speicherort gesammelt werden, da aufgrund rechtlicher Beschränkungen sowie aufgrund praktischer Einschränkungen, wie beispielsweise eine beschränkte Netzwerkbandbreite von Fabriken.

Im Stand der Technik wird ein verteiltes Training von KI bereits angewendet, um die zuvor genannten Probleme zu lösen, um beispielsweise Daten, welche auf lokalen Speichern liegen können und nicht an einen zentralen Speicherort kopiert werden zu müssen.

Es kann eine konventionelle sequenzielle Technik auf Basis föderierten Lernens ("federated learning", kurz FL) auch dazu angewendet werden, um Grund-Modelle zu trainieren, wenn beispielsweise Geräte über begrenzte Rechenressourcen verfügen oder wenn die Netzwerkbandbreite eingeschränkt ist.

Daten-Merkmale wie "IIDness" spielen jedoch eine wichtige Rolle für die Anwendbarkeit von sequentiellem vs. parallelem Federated Learning.

In der Wahrscheinlichkeitstheorie und Statistik ist eine Sammlung von Zufallsvariablen unabhängig und identisch verteilt, wenn jede Zufallsvariable die gleiche Wahrscheinlichkeitsverteilung wie die anderen hat und alle voneinander unabhängig sind.

Diese Eigenschaft wurde zuerst in der Statistik definiert und findet Anwendung in verschiedenen Bereichen wie Data Mining und Signalverarbeitung.

In der Statistik geht es häufig um Zufallsstichproben, welche man sich als eine Menge von Objekten vorstellen kann, die nach dem Zufallsprinzip ausgewählt werden.

Formaler ausgedrückt handelt es sich um "eine Abfolge unabhängiger, identisch verteilter zufälliger Datenpunkte" (engl. "independent, identically distributed", kurz IID).

Mit anderen Worten entsprechen die Begriffe Zufallsstichprobe und IID einander.

In der Statistik ist "Zufallsstichprobe" die typische Terminologie, aber in der Wahrscheinlichkeit ist es gebräuchlicher "IID" zu sagen, wobei eine "IIDness" den zahlenmäßigen Wert oder Grad der IID ausdrückt, und somit eine "hohe IIDness" für einen hohen Wert für die IID steht, und eine "niedrige IIDness" für einen niedrigen Wert für die IID steht.

Identisch verteilt bedeutet, dass es keine allgemeinen Trends gibt - die Verteilung schwankt nicht und alle Elemente in der Stichprobe stammen aus derselben Wahrscheinlichkeitsverteilung.

Unabhängig bedeutet, dass es sich bei den Stichprobenelementen um unabhängige Ereignisse handelt, mit anderen Worten sind sie in keiner Weise miteinander verbunden.

Die Kenntnis des Wertes einer Variablen gibt keine Auskunft über den Wert der anderen und umgekehrt

In einem IID-Industriebilddatensatz mit hoher IIDness ist jedes Bild, das eine bestimmte industrielle Komponente darstellt, wie beispielsweise Bolzen oder Schrauben, unabhängig von anderen und stammt aus derselben Verteilung, wodurch konsistente statistische Eigenschaften für alle Bilder gewährleistet werden.

In einem industriellen Bilddatensatz ohne IID, also niedriger IIDness, können Bilder, die von verschiedenen Fabriken oder Produktionslinien gesammelt wurden, Korrelationen aufgrund von Variationen in Herstellungsprozessen oder -anlagen aufweisen, was zu Unterschieden in den statistischen Eigenschaften zwischen Teilmengen von Bildern führt.

Um Grund-Modelle zu trainieren, müssen auch Szenarien mit niedrigen IID-Daten beherrscht werden, wobei der Grad der IIDness'en bestimmt, welche Trainingsmethode für verteiltes Lernen angewendet werden kann.

Zusätzlich ist die verfügbare Bandbreite zwischen den System-Einheiten eines KI-Systems ein signifikanter und limitierender Faktor beim Austausch von großen ML-Modellen und/oder Trainingsdaten zwischen Server und den verbundenen Klienten.

Es ist daher Aufgabe der Erfindung ein Verfahren bereitzustellen, welches ein verbessertes Modell-Training für Grund-Modelle mit einer verteilten Systemarchitektur erlaubt, insbesondere für Systeme mit niedriger Bandbreite zwischen den System-Einheiten, und Trainingsdaten sowohl mit niedriger IIDness, als auch hoher IIDness.

Es ist dabei vorteilhaft, wenn eine Anonymität der Daten unterstützt wird, also keine Rohdaten im Netzwerk des Systems verteilt werden.

Die erfindungsgemäße Aufgabe wird durch ein computer-implementiertes Verfahren zum Betrieb eines technischen Geräts durch ein Klienten-Server-System mit einem Server und Klienten, welche jeweils mit jeweiligen technischen Geräten verbunden sind, und folgende Schritte ausgeführt werden:
a. Bereitstellen von Betriebs-Daten aus dem Betrieb des technischen Geräts des jeweiligen Klienten, und Erzeugen von Betriebs-Meta-Informationen über den Betrieb des technischen Geräts aus den Betriebs-Daten mithilfe eines bereitgestellten, trainierten Merkmalsextraktions-Modells, durch den Server,
b. Bereitstellen eines trainierten Basis-Modells an den Server, und Anwenden der Betriebs-Daten und der Betriebs-Meta-Informationen des jeweiligen Klienten auf das Basis-Modell und Erhalten von jeweiligen Betriebs-Merkmalen, durch den Server,
c. Berechnen der Ähnlichkeit von zwischen den Betriebs-Merkmalen der jeweiligen Klienten in Form eines Ähnlichkeits-Werts,
d. Zuordnen der Klienten zu einer jeweiligen Klienten-Gruppe aus einer Menge an Klienten-Gruppen, wobei jede Klienten-Gruppe aus einer Menge an Klienten-Gruppen mithilfe eines jeweiligen vorgegebenen Wertebereichs für den Ähnlichkeits-Wert der jeweiligen Klienten-Gruppe definiert sind,
e. Feststellen der größten Klienten-Gruppe aus einer Menge an Klienten-Gruppen, welche die meisten Klienten aufweist,
f. Bilden des durchschnittlichen Ähnlichkeit-Werts aus den jeweiligen Ähnlichkeits-Werten der Klienten der größten Klienten-Gruppe,
g. Festlegen eines Personalisierungs-Faktors für jeden Klienten auf Basis des durchschnittlichen Ähnlichkeit-Werts, welcher eine Ähnlichkeit des jeweiligen Klienten zum durchschnittlichen Ähnlichkeit-Wert der jeweiligen Gruppe ausdrückt,
h. Erzeugen von globalen Modell-Parametern für jeden Klienten basierend auf dem jeweiligen Personalisierungs-Faktor und der Differenz zwischen den jeweiligen Betriebs-Daten und den globalen Modell-Parametern,
i. Aktualisieren des Basis-Modells mithilfe der globalen Modell-Parameter,
j. Fortsetzen bei Schritt c), bis ein vorbestimmtes Kriterium für die Wiederholungen der Schritte c) - i) erreicht ist, sonst Fortsetzen mit Schritt k),
k. Betreiben des technischen Geräts mit dem aktualisierten Basis-Modell.

Durch die Erfindung können personalisierte Aktualisierungen von Modellparametern vorteilhaft erreicht werden.

Dabei wird die Ähnlichkeit zwischen Klienten innerhalb der größten Gruppe genutzt, um Modellanpassungen anzupassen und die Modellleistung und Konvergenz beim föderierten Lernen zu verbessern.

Ferner kann vorteilhaft ein dynamischer Personalisierungsfaktor eingeführt werden, welcher dazu verwendet wird, um das Gesamt-Modell durch gezielte stärkere Gewichtung von Daten einzelner Klienten zu verbessern, beziehungsweise die Modell-Genauigkeit zu erhöhen.

Durch die dynamische Definition des Personalisierungsfaktors auf der Grundlage durchschnittlicher Ähnlichkeitswerte passt die Methode den Einfluss des lokalen Datensatzes jedes Klienten auf die globalen Modellaktualisierungen an und ermöglicht flexible und feinkörnige, detailreiche Anpassungen, um unterschiedliche Datenverteilungen in föderierten Umgebungen zu berücksichtigen.

Ein großer Vorteil dieses Ansatzes besteht darin, eine sequentielle "Bias"-Akkumulation beim sequentiellen föderierten Lernen (kurz SFL) zu adressieren.

Wenn die Reihenfolge der Geräteaktualisierungen nicht sorgfältig berücksichtigt wird, können Verzerrungen, die sich bei sequenziellen Aktualisierungen ansammeln, die Gesamtleistung des Modells beeinträchtigen.

Beispielsweise können frühe Updates von Geräten mit verzerrten Datenverteilungen das Modell dominieren, was zu einer schlechten Generalisierung führt.

Der Faktor der "Dynamische Personalisierung" löst dieses Problem auf vorteilhafte und einfache Weise und erlaubt, das Modell während des Betriebs des technischen Geräts kontinuierlich an aktuelle Änderungen oder Einflüsse beim Betrieb des technischen Geräts anzupassen und die Genauigkeit zu erhalten oder zu verbessern.

Unter Betriebs-Meta-Informationen über den Betrieb des technischen Geräts werden im vorliegenden Zusammenhang Daten verstanden, welche beispielsweise den korrekten Betrieb oder auch den Betrieb in unzulässigen Betriebsbereichen beschreiben, um eine entsprechende Anomalie-Erkennung oder eine Betriebszustands-Überwachung durchzuführen, oder auch Daten zur Beschreibung des technischen Geräts an sich, dessen Aufbau, Betriebszustand oder dessen Betriebsumgebung.

Diese Daten können beispielsweise aus Rohdaten, wie Sensordaten oder Bilddaten, gewonnen werden, wobei beispielsweise eine Größenanpassung, eine Normalisierung oder andere Transformationen der Rohdaten durchgeführt werden können, um auf eine nachfolgende Weiterverarbeitung mehrerer Datensätze durch die Anwendung eines oder mehrerer ML-Modelle vorzubereiten.

Das technische Gerät, beispielsweise eine Pumpe, eine Produktionsmaschine, ein Roboter, etc., kann durch umfasste Sensoren Gerätedaten wie Betriebsspannungen, Temperaturen oder Vibrationen erfassen, und diese Gerätedaten durch eine Überwachungs-Vorrichtung mithilfe eines Modells auf Basis künstlicher Intelligenz analysieren, um beispielsweise den laufenden Betrieb zu überwachen, und das Gerät durch ein Modell auf Basis künstlicher Intelligenz beispielsweise in Form von Steuersignalen, welche durch das Modell von einer SteuerVorrichtung gebildet werden, angesteuert wird.

Dabei kann das technische Gerät beispielsweise eine Inspektionsvorrichtung für ein, von einer Produktionsmaschine erzeugtes Produkt sein, wobei mithilfe bildgebender Sensoren das Produkt erfasst wird und der äußere Zustand analysiert und die Produktionsmaschine dementsprechend angesteuert wird.

In einer Weiterbildung der Erfindung ist es vorgesehen, dass das Bereitstellen im Schritt a) durch den jeweiligen Klienten erfolgt.

Dadurch wird erreicht, dass die Klienten selbst die Daten aufbereiten und bereitstellen, wodurch der Server entlastet wird und weniger Daten über das Netzwerk übertragen werden müssen, sowie Anforderungen an eine Geheimhaltung oder eine sichere Datenübertragung der Daten einfach und vorteilhaft eingehalten werden können.

Die Betriebs-Merkmale können auch als Merkmals-Vektoren bezeichnet werden, welche beispielsweise aus Sensor-Bildern durch Anwendung eines entsprechenden ML-Modells als Inferenz extrahiert wurden, und das ML-Modell mithilfe von bereitgestellten Sensor-Bildern trainiert wurde.

In einer Weiterbildung der Erfindung ist es vorgesehen, dass die Schritte c) - i) durch den Server ausgeführt werden.

Dadurch wird erreicht, dass auf einfache und effiziente Weise die Daten erfindungsgemäß verarbeitet werden können.

In einer Weiterbildung der Erfindung ist es vorgesehen, dass die Ähnlichkeit die Cosinus-Ähnlichkeit ist.

Dadurch wird erreicht, dass die Ähnlichkeit im vorliegenden Kontext auf einfache und effiziente Weise bestimmt werden kann.

In einer Weiterbildung der Erfindung ist es vorgesehen, dass sich die Wertebereiche der einzelnen Klienten-Gruppen aus einer Menge an Klienten-Gruppen nicht überlappen.

Dadurch wird erreicht, dass die Gruppen eine hohe Unterscheidungskraft aufweisen und daraus gebildete Modelle eine besondere Genauigkeit aufweisen können.

In einer Weiterbildung der Erfindung ist es vorgesehen, dass ein hoher jeweiliger Personalisierungs-Faktor eine hohe Gewichtung der jeweiligen Modell-Parameter im globalen Modell bewirkt.

Dadurch wird erreicht, dass der jeweilige Personalisierungs-Faktor auf einfache und effiziente Weise bei der Bestimmung von Modellen berücksichtigt werden kann.

In einer Weiterbildung der Erfindung ist es vorgesehen, dass das vorbestimmte Kriterium eine Anzahl von Wiederholungen der Schritte c) - i), das Erreichen eines gewünschten Genauigkeitsniveaus oder das Beobachten einer minimalen Verbesserung der globalen Modellleistung ist.

Dadurch wird erreicht, dass die Gruppenbildung auf einfache und effiziente Weise durchgeführt werden kann.

Die erfindungsgemäße Aufgabe wird auch durch ein Klienten-Server-System zum Betrieb eines technischen Geräts gelöst, wobei das System einen Server und Klienten aufweist, welche Klienten jeweils mit jeweiligen technischen Geräten verbunden sind, und das erfindungsgemäße Verfahren ausgeführt wird.

In einer Weiterbildung der Erfindung ist es vorgesehen, dass das jeweilige technische Gerät eine Vorrichtung zur Erfassung der Modell-Genauigkeit beim Betrieb des technischen Geräts aufweist, welche dazu eingerichtet ist, die Modell-Genauigkeit im Vergleich mit aktuell erfassten Betriebsparametern des technischen Geräts zu erfassen.

Die erfindungsgemäße Aufgabe wird auch durch ein Computer-Programm-Produkt mit darin gespeicherten maschinenlesbaren Anweisungen gelöst, die, wenn sie von dem erfindungsgemäßen Klienten-Server-System ausgeführt werden, dieses veranlassen, das erfindungsgemäße Verfahren auszuführen.

In den nachfolgenden Zeichnungen wird die Erfindung anhand eines Ausführungsbeispiels näher beschrieben. In den Figuren zeigt
- Fig. 1: Ablaufdiagramme mit zwei Ausführungsbeispielen des erfindungsgemäßen Verfahrens,
- Fig. 2: ein Beispiel für einen ersten Teil des Verfahrens in Form eines Pseudo-Codes,
- Fig. 3: ein Beispiel für einen zweiten Teil des Verfahrens in Form eines Pseudo-Codes,
- Fig. 4: ein Beispiel für einen dritten Teil des Verfahrens in Form eines Pseudo-Codes,
- Fig. 5: ein Beispiel für ein System, auf welchem das erfindungsgemäße Verfahren ausgeführt werden kann.

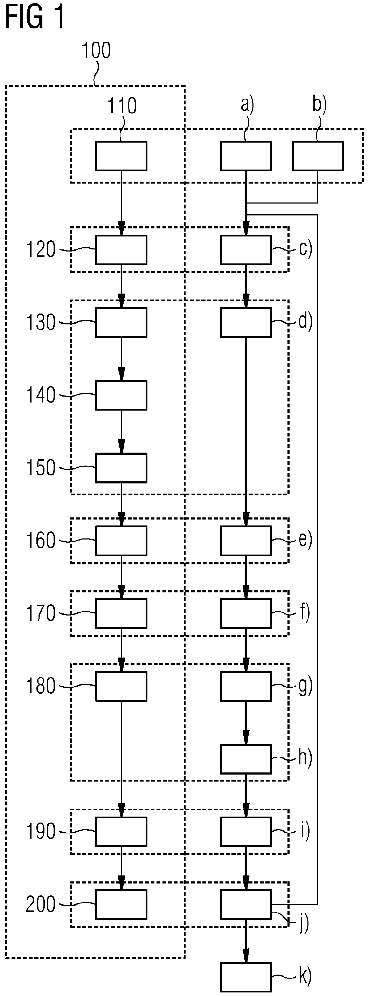

Fig. 1 zeigt auf der linken Seite der Figur ein erstes Ausführungsbeispiel mit einem Ablaufdiagramm des erfindungsgemäßen Verfahrens 100 mit zehn Verfahrensschritten 110 - 200.

Auf der rechten Seite der Figur ist ein zweites Ausführungsbeispiel mit einem Ablaufdiagramm des erfindungsgemäßen Verfahrens dargestellt.

Das Verfahren 100 kann beispielsweise durch folgende Schritte implementiert sein.

Der erste Schritt 110 umfasst die Extraktion von Merkmalen aus Bildern, die von Klienten bereitgestellt werden.

Dabei werden zunächst die Bilder einer Vorverarbeitung unterzogen, die Größenänderung, Normalisierung oder andere Transformationen umfassen kann, um sie für die Merkmalsextraktion zu standardisieren.

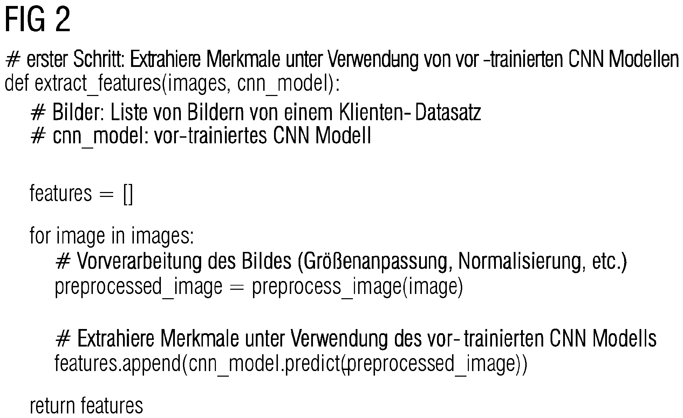

Fig. 2 zeigt ein Ausführungsbeispiel des ersten Schritts 110 des erfindungsgemäßen Verfahrens, bei welchem Merkmale aus den vorverarbeiteten Bildern mit Hilfe eines vortrainierten CNN-Modells (Convolutional Neural Network) extrahiert werden.

Diese Funktionen erfassen High-Level-Darstellungen des Bildinhalts und ermöglichen Vergleiche zwischen Bildern und anschließendes Clustering basierend auf ihrer Ähnlichkeit.

Der nachfolgende zweite Schritt 120 beinhaltet die Berechnung der Kosinus-Ähnlichkeit zwischen den Merkmalsvektoren, die aus Bildern verschiedener Klienten extrahiert wurden.

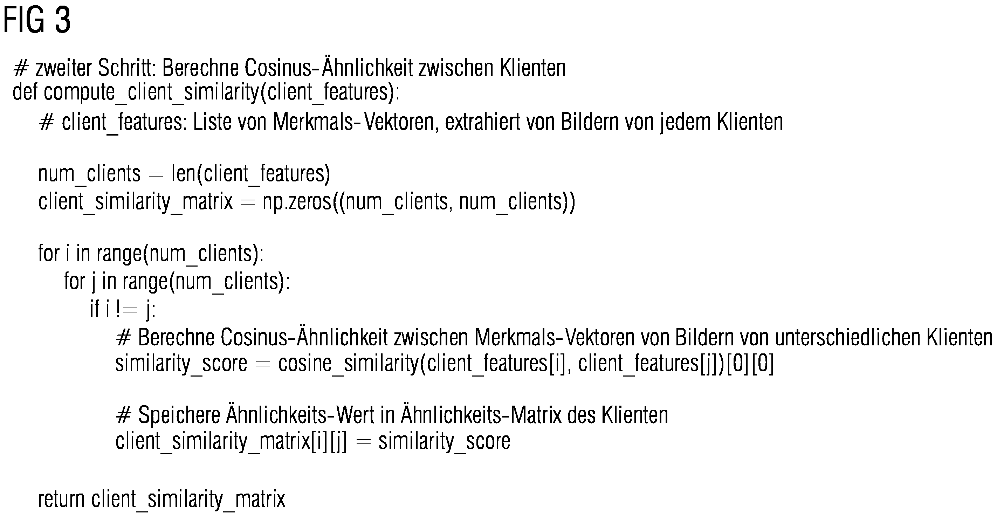

Fig. 3 zeigt ein Ausführungsbeispiel des zweiten Schritts 120 des erfindungsgemäßen Verfahrens, wobei die Ähnlichkeit der Betriebs-Merkmale der Klienten C1-C3 berechnet wird.

Der Datensatz jedes Klienten wird durch einen Satz von Merkmals-Vektoren dargestellt, und die Kosinus-Ähnlichkeit wird paarweise zwischen diesen Vektoren berechnet.

Dieses Ähnlichkeitsmaß quantifiziert den Grad der Ähnlichkeit zwischen den Datensätzen verschiedener Klienten und bietet eine Grundlage für das Gruppieren von Klienten mit ähnlichen Datensätzen.

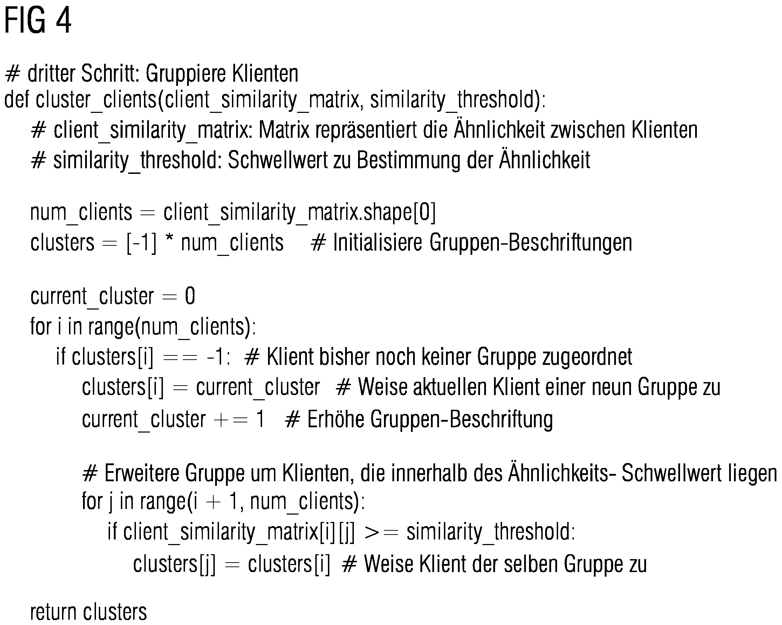

**Fig. 4** zeigt ein Ausführungsbeispiel des dritten Schritts 130 des erfindungsgemäßen Verfahrens, bei welchem Klienten gruppiert werden, basierend auf den in Schritt 120 berechneten Kosinus-Ähnlichkeitswerten.

Im vierten Schritt 140 nach **Fig. 1** wird ein vordefinierter Ähnlichkeits-Schwellenwert angewendet, um zu bestimmen, wann Klienten als ähnlich genug angesehen werden, um zusammen gruppiert zu werden.

Im fünften Schritt 150 werden iterativ Gruppen zugewiesen, basierend auf ihren paarweisen Ähnlichkeitswerten, wobei jede Gruppe eine Gruppe von Klienten mit ausreichend ähnlichen Datensätzen darstellt.

Der Gruppierungs-Prozess wird fortgesetzt, bis alle Klienten den entsprechenden Gruppen zugewiesen wurden, wobei zusammenhängende Gruppen basierend auf der Ähnlichkeit ihrer Datensätze gebildet werden.

Im sechsten Schritt 160 wird die größte Gruppe identifiziert, also unter den Gruppen wird die umfänglich größte Gruppe - mit den meisten zugeordneten Klienten - bestimmt, welche im Schritt 130 gebildet wurden.

Im siebenten Schritt 170 wird für jeden Klienten die durchschnittliche Ähnlichkeitsbewertung zwischen dem Klienten und seinen "Peer"-Klienten, also Klienten innerhalb derselben Gruppe berechnet.

Im achten Schritt 180 werden die globalen Modellparameter personalisiert, basierend auf dem lokalen Datensatz des Klienten und dem durchschnittlichen Ähnlichkeitswert.

Im neunten Schritt 190 wird das globale Modell mit den personalisierten Parametern aus dem Klienten aktualisiert.

Im zehnten Schritt 200 wird die sequenzielle Iteration durch alle Klienten in der Gruppe wiederholt, bis ein oder mehrere vordefinierten Konvergenzkriterien erfüllt sind.

Die Konvergenzkriterien sind dabei Kriterien, welche bestimmen, wann die Iteration durch Klienten beendet werden soll.

Dies kann beispielsweise das Erreichen einer bestimmten Anzahl von Iterationen, das Erreichen eines gewünschten Genauigkeitsniveaus oder das Beobachten einer minimalen Verbesserung der globalen Modellleistung sein.

Das Genauigkeitsniveau des Modells kann bei der Anwendung des Modells beim Betrieb eines technischen Geräts durch eine entsprechende Vorrichtung ermittelt werden, wobei dazu die absolute Genauigkeit des Modells oder auch die relative Genauigkeitsänderung bei der iterativen Genauigkeitsverbesserung des Modells herangezogen werden kann.

Nach der Konvergenz stellt das endgültige globale Modell das aggregierte Wissen dar, das von allen Kunden innerhalb des größten Clusters gelernt wurde, personalisiert auf der Grundlage ihrer lokalen Datensätze und Ähnlichkeiten.

Das Personalisieren der globalen Modellparameter kann erfolgen, da jeder Klient im Kontext des föderierten Lernens über einen eigenen lokalen Datensatz verfügt, und das globale Modell basierend auf dem aggregierten Wissen aller Klienten aktualisiert wird.

Wenn ein Klient am Training teilnimmt, berechnet dieser die Differenz zwischen seinem lokalen Datensatz und den aktuellen globalen Modellparametern.

Diese Differenz stellt den Gradienten der Verlustfunktion in Bezug auf die Parameter dar, welche für jeden Klienten i berechnet wird, wobei der Gradient der Verlust-Funktion L bezüglich der Parameter θ unter Verwendung des jeweiligen lokalen Datensatzes Dᵢ berechnet wird.

Dieser Gradient - bezeichnet als ∇θL(Di,θ) - repräsentiert die Richtung und den Betrag der Änderung, welche zum Minimieren der Verlust-Funktion benötigt wird, während der Aktualisierung der Parameter vom aktuellen globalen Model-Zustand in Richtung des Klienten-Datensatzes Dᵢ.

Die Differenz zwischen dem lokalen Datensatz des Klienten und den aktuellen globalen Model-Parametern ist durch den Gradienten Dᵢ-θ=∇θL(Dᵢ,θ) festgelegt, und erfasst, wie das globale Modell geändert werden muss, um besser an den lokalen Datensatz der Klienten angepasst zu werden.

Mit anderen Worten stellt die Differenz Information über Aktualisierungen bereit, welche zur Anpassung des globalen Models mit den Charakteristiken des Datensatzes der Klienten benötigt werden.

Der Personalisierungs-Faktor dient zur Einbeziehung von personalisierten Aktualisierungen basierend auf dem Datensatz des Klienten und dem Personalisierungs-Faktor λᵢ, und einer Skalierung des Gradienten durch den Personalisierungs-Faktor λᵢ.

Auf Grundlage des Werts für die durchschnittliche Ähnlichkeit, welcher für jeden Klienten berechnet wird, kann der Personalisierungs-Faktor λᵢ gemäß dem Wert für die durchschnittlichen Ähnlichkeit definiert werden.

Der Personalisierungs-Faktor λᵢ skaliert die Auswirkung des lokalen Datensatzes des Klienten auf die Aktualisierung der globalen Modell-Parameter.

Ein höherer Wert für die durchschnittliche Ähnlichkeit führt zu größeren Personalisierungs-Faktoren, was einen stärkeren Einfluss des lokalen Datensatzes des Klienten auf die Parameter-Aktualisierung anzeigt.

Eine Aktualisierungs-Gleichung bestimmt die Aktualisierung der globalen Model-Parameter θ mithilfe des skalierten Gradient θᵢ=θ+λᵢ·(Dᵢ-θ).

Diese Gleichung kombiniert die aktuellen globalen Modell-Parameter mit personalisierten Aktualisierungen, basierend auf dem Datensatz des Klienten und dem Personalisierungs-Faktor, und erzeugt die personalisierten Modell-Parameter θᵢ spezifisch für den Klienten i.

Das erfindungsgemäße Verfahren kann daher auch durch ein weiteres, zweites Ausführungsbeispiel mithilfe folgender Schritte beschrieben werden:
a. Bereitstellen von Betriebs-Daten aus dem Betrieb des technischen Geräts TD1-TD3 des jeweiligen Klienten C1-C3, und Erzeugen von Betriebs-Meta-Informationen über den Betrieb des technischen Geräts TD1-TD3 aus den Betriebs-Daten mithilfe eines bereitgestellten, trainierten Merkmalsextraktions-Modells, durch den Server S,
b. Bereitstellen eines trainierten Basis-Modells FM an den Server S, und Anwenden der Betriebs-Daten und der Meta-Informationen des jeweiligen Klienten C1-C3 auf das Basis-Modell FM und Erhalten von jeweiligen Betriebs-Merkmalen, durch den Server S,
c. Berechnen der Ähnlichkeit von zwischen den Betriebs-Merkmalen der jeweiligen Klienten C1-C3 in Form eines Ähnlichkeits-Werts,
d. Zuordnen der Klienten C1-C3 zu einer jeweiligen Klienten-Gruppe aus einer Menge an Klienten-Gruppen, wobei jede Klienten-Gruppe aus einer Menge an Klienten-Gruppen mithilfe eines jeweiligen vorgegebenen Wertebereichs für den Ähnlichkeits-Wert der jeweiligen Klienten-Gruppe definiert sind,
e. Feststellen der größten Klienten-Gruppe aus einer Menge an Klienten-Gruppen, welche die meisten Klienten - also die höchste Anzahl an Klienten - aufweist,
f. Bilden des durchschnittlichen Ähnlichkeit-Werts aus den jeweiligen Ähnlichkeits-Werten der Klienten der größten Klienten-Gruppe,
g. Festlegen eines Personalisierungs-Faktors für jeden Klienten auf Basis des durchschnittlichen Ähnlichkeit-Werts, welcher eine Ähnlichkeit des jeweiligen Klienten zum durchschnittlichen Ähnlichkeit-Wert der jeweiligen Gruppe ausdrückt,
h. Erzeugen von globalen Modell-Parametern für jeden Klienten basierend auf dem jeweiligen Personalisierungs-Faktor und der Differenz zwischen den jeweiligen Betriebs-Daten und den globalen Modell-Parametern,
i. Aktualisieren des Basis-Modells (FM) mithilfe der globalen Modell-Parameter,
j. Fortsetzen bei Schritt c), bis ein vorbestimmtes Kriterium für die Wiederholungen der Schritte c) - i) erreicht ist, sonst Fortsetzen mit Schritt k),
k. Betreiben des technischen Geräts (TD1) mit dem aktualisierten Basis-Modell.

Das Bereitstellen im Schritt a) kann durch den jeweiligen Klienten C1-C3 erfolgen.

Die Schritte c) - i) können durch den Server S ausgeführt werden.

Die Ähnlichkeit die Cosinus-Ähnlichkeit ist.

Die Wertebereiche der einzelnen Klienten-Gruppen aus einer Menge an Klienten-Gruppen überlappen sich bevorzugt nicht.

Ein wertmäßig hoher jeweiliger Personalisierungs-Faktor bewirkt eine hohe Gewichtung der jeweiligen Modell-Parameter bei der Erzeugung beziehungsweise Aktualisierung im globalen Modell.

Das vorbestimmte Kriterium eine Anzahl von Wiederholungen der Schritte c) - i) kann vorteilhaft das Erreichen eines gewünschten Genauigkeitsniveaus oder das Beobachten einer minimalen Verbesserung der globalen Modellleistung sein.

Im Vergleich zu dem zuvor genannten ersten Ausführungsbeispiel können die einzelnen Verfahrensschritte nun dem zweiten Ausführungsbeispiel gegenübergestellt werden.

Die Schritte a) und b) können somit dem zuvor beschriebenen Verfahrensschritt 110 entsprechen.

Der Schritt c) kann dem zuvor beschriebenen Verfahrensschritt 120 entsprechen.

Der Schritt d) kann den zuvor beschriebenen Verfahrensschritten 130, 140 und 150 entsprechen.

Der Schritt e) kann dem zuvor beschriebenen Verfahrensschritt 160 entsprechen.

Der Schritt f) kann dem zuvor beschriebenen Verfahrensschritt 170 entsprechen.

Die Schritte g) und h) können dem zuvor beschriebenen Verfahrensschritt 180 entsprechen.

Der Schritt i) kann dem zuvor beschriebenen Verfahrensschritt 190 entsprechen.

Der Schritt j) kann dem zuvor beschriebenen Verfahrensschritt 200 entsprechen.

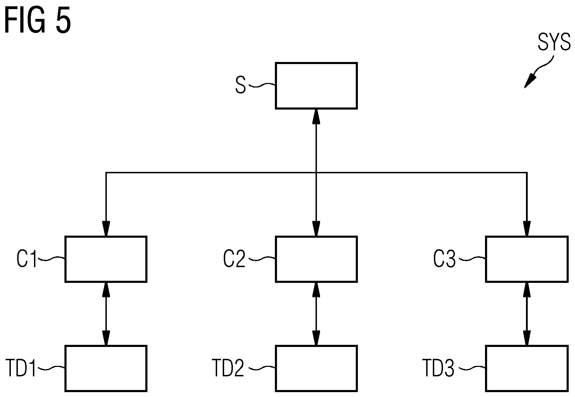

Fig. 5 stellt ein Beispiel für ein System dar, auf welchem das erfindungsgemäße Verfahren ausgeführt werden kann.

Das gezeigte Klienten-Server-System SYS weist einen Server S und drei Klienten C1-C3 auf.

Mit den einzelnen Klienten C1-C3 sind jeweils einzelne technische Geräte TD1-TD3 verbunden.

Das jeweilige technische Gerät TD1-TD3 kann eine Vorrichtung zur Erfassung der Modell-Genauigkeit beim Betrieb des technischen Geräts TD1-TD3 aufweisen, welche dazu eingerichtet ist, die Modell-Genauigkeit im Vergleich mit aktuell erfassten Betriebsparametern des technischen Geräts TD1-TD3 während dessen Betriebs zu erfassen.

*Unabhängig vom grammatikalischen Geschlecht eines bestimmten Begriffes sind Personen mit männlicher, weiblicher oder anderer Geschlechteridentität mit umfasst.*

### Bezugszeichenliste

- 100: Verfahren
- 110-200, a) - k): Verfahrensschritte
- C1-C3: Klient
- S: Server
- SYS: Klienten-Server-System
- TD1-TD3: technisches Gerät

## Patentansprüche

1. Computer-implementiertes Verfahren zum Betrieb eines technischen Geräts (TD1) durch ein Klienten-Server-System (SYS) mit einem Server (S) und Klienten (C1-C3), welche jeweils mit jeweiligen technischen Geräten (TD1-TD3) verbunden sind, und folgende Schritte ausgeführt werden:
a. Bereitstellen von Betriebs-Daten aus dem Betrieb des technischen Geräts (TD1-TD3) des jeweiligen Klienten (C1-C3), und Erzeugen von Betriebs-Meta-Informationen über den Betrieb des technischen Geräts (TD1-TD3) aus den Betriebs-Daten mithilfe eines bereitgestellten, trainierten Merkmalsextraktions-Modells, durch den Server (S),
b. Bereitstellen eines trainierten Basis-Modells an den Server (S), und Anwenden der Betriebs-Daten und der Meta-Informationen des jeweiligen Klienten (C1-C3) auf das Basis-Modell und Erhalten von jeweiligen Betriebs-Merkmalen, durch den Server (S),
c. Berechnen der Ähnlichkeit von zwischen den Betriebs-Merkmalen der jeweiligen Klienten (C1-C3) in Form eines Ähnlichkeits-Werts,
d. Zuordnen der Klienten (C1-C3) zu einer jeweiligen Klienten-Gruppe aus einer Menge an Klienten-Gruppen, wobei jede Klienten-Gruppe aus einer Menge an Klienten-Gruppen mithilfe eines jeweiligen vorgegebenen Wertebereichs für den Ähnlichkeits-Wert der jeweiligen Klienten-Gruppe definiert sind,
e. Feststellen der größten Klienten-Gruppe aus einer Menge an Klienten-Gruppen, welche die meisten Klienten aufweist,
f. Bilden des durchschnittlichen Ähnlichkeit-Werts aus den jeweiligen Ähnlichkeits-Werten der Klienten der größten Klienten-Gruppe,
g. Festlegen eines Personalisierungs-Faktors für jeden Klienten auf Basis des durchschnittlichen Ähnlichkeit-Werts, welcher eine Ähnlichkeit des jeweiligen Klienten zum durchschnittlichen Ähnlichkeit-Wert der jeweiligen Gruppe ausdrückt,
h. Erzeugen von globalen Modell-Parametern für jeden Klienten basierend auf dem jeweiligen Personalisierungs-Faktor und der Differenz zwischen den jeweiligen Betriebs-Daten und den globalen Modell-Parametern,
i. Aktualisieren des Basis-Modells mithilfe der globalen Modell-Parameter,
j. Fortsetzen bei Schritt c), bis ein vorbestimmtes Kriterium für die Wiederholungen der Schritte c) - i) erreicht ist, sonst Fortsetzen mit Schritt k),
k. Betreiben des technischen Geräts (TD1) mit dem aktualisierten Basis-Modell.

2. Verfahren nach dem vorhergehenden Anspruch, wobei das Bereitstellen im Schritt a) durch den jeweiligen Klienten (C1-C3) erfolgt.

3. Verfahren nach einem der vorhergehenden Ansprüche, wobei die Schritte c) - i) durch den Server (S) ausgeführt werden.

4. Verfahren nach einem der vorhergehenden Ansprüche, wobei die Ähnlichkeit die Cosinus-Ähnlichkeit ist.

5. Verfahren nach einem der vorhergehenden Ansprüche, wobei sich die Wertebereiche der einzelnen Klienten-Gruppen aus einer Menge an Klienten-Gruppen nicht überlappen.

6. Verfahren nach einem der vorhergehenden Ansprüche, wobei ein hoher jeweiliger Personalisierungs-Faktor eine hohe Gewichtung der jeweiligen Modell-Parameter im globalen Modell bewirkt.

7. Verfahren nach einem der vorhergehenden Ansprüche, wobei das vorbestimmte Kriterium eine Anzahl von Wiederholungen der Schritte c) - i), das Erreichen eines gewünschten Genauigkeitsniveaus oder das Beobachten einer minimalen Verbesserung der globalen Modellleistung ist.

8. Klienten-Server-System (SYS) zum Betrieb eines technischen Geräts (TD1) mit einem Server (S) und Klienten (C1-C3), welche jeweils mit jeweiligen technischen Geräten (TD1-TD3) verbunden sind, und das Verfahren nach einem der vorhergehenden Ansprüche ausgeführt wird.

9. System (SYS) nach dem vorhergehenden Anspruch, wobei das jeweilige technische Gerät (TD1-TD3) eine Vorrichtung zur Erfassung der Modell-Genauigkeit beim Betrieb des technischen Geräts (TD1-TD3) aufweist, welche dazu eingerichtet ist, die Modell-Genauigkeit im Vergleich mit aktuell erfassten Betriebsparametern des technischen Geräts (TD1-TD3) zu erfassen.

10. Computer-Programm-Produkt mit darin gespeicherten maschinenlesbaren Anweisungen, die, wenn sie von dem Klienten-Server-System (SYS) nach einem der beiden vorhergehenden Ansprüche ausgeführt werden, dieses veranlassen, das Verfahren nach einem der vorhergehenden Ansprüche auszuführen.
